# EUROPEAN PATENT APPLICATION

(11) **EP 2 546 486 A1**
(43) Date of publication of application: **16.01.2013**
(21) Application number: 10847352.1
(22) Date of filing: 12.03.2010
(51) Int. Cl.: F01N 3/20, F01N 3/24, F01N 3/36

(54) **EXHAUST PURIFICATION SYSTEM FOR AN INTERNAL COMBUSTION ENGINE**

(71) Applicant: Toyota Jidosha Kabushiki Kaisha, Toyota-shi, Aichi 471-8572 (JP)
(72) Inventor: KANBA, Chika, Toyota-shi Aichi 471-8571 (JP); KATAYAMA, Haruyuki, Toyota-shi Aichi 471-8571 (JP)
(74) Representative: Intès, Didier Gérard André
(86) International application number: PCT/JP2010/001786
(87) International publication number: WO 2011/111118

(57) **Abstract**

An exhaust gas purification system for an internal combustion engine, the system being provided with: an exhaust gas purification device (13) that is provided in an exhaust gas passage (12) of the internal combustion engine (1); a preceding stage catalyst (14) that is provided in the exhaust gas passage (12) at an upstream side of the exhaust gas purification device (13) and passed through by a part of exhaust gas that flows through the exhaust gas passage (12); a bypass passage (31) that directly introduces exhaust gas of the internal combustion engine (1) into the exhaust gas passage (12) at a downstream side of the preceding stage catalyst (14); and a bypass valve (34) that opens/closes the bypass passage (31).

## Description

### BACKGROUND OF THE INVENTION

### Technical Field

The present invention relates to an exhaust gas purification system having an exhaust gas temperature raising device that is provided in an exhaust gas passage of an internal combustion engine and raises temperature of exhaust gas.

### Background Art

There is proposed an exhaust gas purification device in which on an upstream side of an exhaust gas purification catalyst arranged in an exhaust gas passage of an engine, a small-sized oxidation catalyst having a smaller volume than that of the exhaust gas purification catalyst is arranged (see, for example, Patent literatures 1 and 2). In this sort of device, it is expected to quickly activate the exhaust gas purification catalyst by heat generated from the small-sized oxidation catalyst and to reform a reducer such as fuel fed to the small-sized oxidation catalyst.

### Citation List

### Patent Literature

Patent literature 1: Japanese Patent Laid-Open No. 2009-156164
Patent literature 2: Japanese Patent Laid-Open No. 2009-209804

### Summary of Invention

### Problem to be Solved by the Invention

However, in this sort of device, between exhaust gas having passed through the small-sized oxidation catalyst and exhaust gas not having passed through the small-sized oxidation catalyst, a temperature difference may become large, and in such a case, purification performance and durability of the downstream side exhaust gas purification catalyst may be influenced. On the other hand, if a current plate for facilitating mixture of the exhaust gases is provided between the small-sized oxidation catalyst and the exhaust gas purification catalyst, a total length of an exhaust system may be excessively increased.

An object of the present invention is to provide a new measure configured to be able to suppress a temperature difference in exhaust gas that reaches from a preceding stage catalyst such as a small-sized oxidation catalyst to an exhaust gas purification catalyst on a downstream side of the preceding stage catalyst.

### Solution to Problem

A first aspect of the present invention is an exhaust gas purification system for an internal combustion engine, the system being provided with: an exhaust gas purification device that is provided in an exhaust gas passage of the internal combustion engine; a preceding stage catalyst that is provided in the exhaust gas passage at an upstream side of the exhaust gas purification device and passed through by a part of exhaust gas that flows through the exhaust gas passage; a bypass passage that directly introduces exhaust gas of the internal combustion engine into the exhaust gas passage at a downstream side of the preceding stage catalyst and an upstream side of the exhaust gas purification device; and a bypass valve that opens/closes the bypass passage.

In this aspect, the bypass passage that directly introduces the exhaust gas of the internal combustion engine into the exhaust gas passage that is on the downstream side of the preceding stage catalyst, and the bypass valve that opens/closes the bypass passages are provided, and therefore exhaust gas having passed through the preceding stage catalyst and exhaust gas not having passed through the preceding stage catalyst are stirred by the exhaust gas fed from the bypass passage. Accordingly, a temperature difference in exhaust gas that reaches an exhaust gas purification catalyst on the downstream side of the preceding catalyst can be reduced.

Preferably, the system is provided with a reducer feeding device that is provided on an upstream side of the preceding stage catalyst and feeds a reducer to exhaust gas that flows into the preceding stage catalyst. In this case, an exhaust gas temperature raising device may be further provided with a heating unit configured to heat the reducer fed from the reducer feeding device.

Preferably, the system is further provided with a controller that controls the bypass valve, wherein the controller controls the bypass valve such that a difference obtained by subtracting pressure at a downstream side of the preceding stage catalyst from pressure at an upstream side of the preceding stage catalyst exceeds a predetermined value. In this aspect, the exhaust gas can be suppressed from flowing back near the preceding catalyst.

Preferably, a downstream side end part of the bypass passage is connected to the exhaust gas passage with being deflected toward a downstream side of the exhaust gas passage. In this aspect, the exhaust gas can be suppressed from flowing back near the preceding catalyst.

Preferably, a downstream side end part of the bypass passage is connected to the exhaust gas passage with being deflected toward an upstream side of the exhaust gas passage. In this aspect, the stirring of the exhaust gas having passed through the preceding stage catalyst and the exhaust gas not having passed through the preceding stage catalyst can be facilitated.

Preferably, a downstream side end part of the bypass passage is connected to the exhaust gas passage with facing to an intermediate part of the preceding stage catalyst in a flow direction. In this aspect, a temperature rise of the preceding stage catalyst can be facilitated by the high-temperature exhaust gas introduced from the bypass passage

Preferably, the system is further provided with a turbocharger that has a turbine arranged in the exhaust gas passage, wherein an upstream side of the bypass passage is connected to the exhaust gas passage at an upstream side of the turbine. In this aspect, high-temperature and high-pressure exhaust gas on the upstream side of the turbine in the exhaust gas passage can be preferably used. In this case, preferably, the upstream side of the bypass passage is connected to an exhaust manifold provided in the internal combustion engine.

Preferably, the bypass valve is arranged near a downstream side end part of the bypass passage, and when operated to open, deflects a flow of exhaust gas from the bypass passage toward an upstream side of the exhaust gas passage. In this case, the stirring of the exhaust gas having passed through the preceding stage catalyst and the exhaust gas not having passed through the preceding stage catalyst can be facilitated.

Note that solutions to the problems in the present invention can be used in combination to the extent possible.

### Advantageous Effect of the Invention

According to the present invention, a temperature difference in exhaust gas that reaches from the preceding stage catalyst to the exhaust gas purification catalyst on the downstream side of the preceding stage catalyst can be reduced.

### Brief Description of Drawings

FIG. 1 is a conceptual diagram of a first embodiment of the present invention.
FIG. 2 is a flowchart illustrating a process of feeding fuel to an exhaust gas passage.
FIG. 3 is a side view illustrating a configuration example of a connection structure between an exhaust pipe and a bypass passage.
FIG. 4 is a side view illustrating a configuration example of the connection structure between the exhaust pipe and the bypass passage.
FIG. 5 is a side view illustrating a configuration example of the connection structure between the exhaust pipe and the bypass passage.
FIG. 6 is a front view illustrating a configuration example of the connection structure between the exhaust pipe and the bypass passage.
FIG. 7 is a front view illustrating a configuration example of the connection structure between the exhaust pipe and the bypass passage.
FIG. 8 is a front view illustrating a configuration example of the connection structure between the exhaust pipe and the bypass passage.
FIG. 9 is a front view illustrating a configuration example of the connection structure between the exhaust pipe and the bypass passage.
FIG. 10 is a front view illustrating a configuration example of the connection structure between the exhaust pipe and the bypass passage.
FIG. 11 is a front view illustrating a configuration example of the connection structure between the exhaust pipe and the bypass passage.
FIG. 12 is a front view illustrating a configuration example of the connection structure between the exhaust pipe and the bypass passage.

### Description of Embodiments

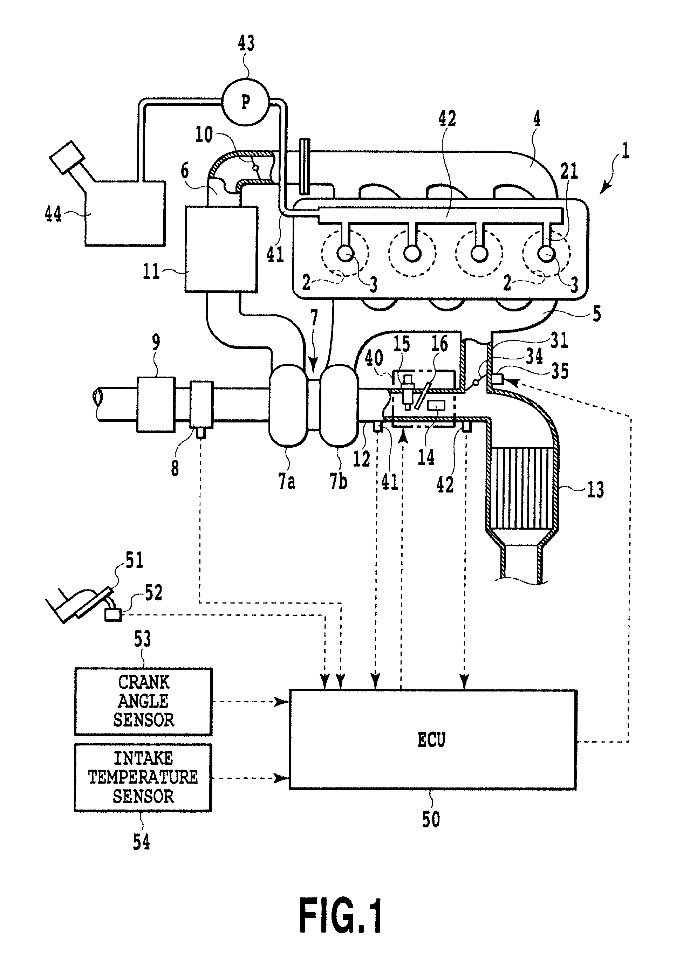

A preferred embodiment of the present invention is described in detail below. FIG. 1 illustrates a first embodiment of the present invention. In FIG. 1, an engine main body 1 is a compression ignited internal combustion engine (diesel engine) that uses light oil as fuel; however, it may be another type of internal combustion engine. The engine main body 1 has a combustion chamber 2 for each of four cylinders. In each of the combustion chambers 2, an electronically controlled fuel injection valve 3 for injecting the fuel is arranged. The combustion chambers 2 are respectively connected with an intake manifold 4 and an exhaust manifold 5. The intake manifold 4 is connected to an outlet of a compressor 7a of an exhaust turbocharger 7 through an intake pipe 6. An inlet of the compressor 7a is connected to an air cleaner 9 through an air flow meter 8.

In the intake pipe 6, a throttle valve 10 that is driven by a step motor (not illustrated) is arranged. Around the intake pipe 6, an intercooler for cooling intake air that flows through the intake pipe 6 is arranged. Engine cooling water is introduced into the intercooler 11 to thereby cool the intake air.

The exhaust manifold 5 is connected to an inlet of an exhaust turbine 7b of the exhaust turbocharger 7. An outlet of the exhaust turbine 7b is connected to an exhaust gas purification catalyst 13 through an exhaust pipe 12. In an engine exhaust gas passage on an upstream side of the exhaust gas purification catalyst 13, i.e., in the exhaust pipe 12, a small-sized oxidation catalyst 14 is arranged. The small-sized oxidation catalyst 14 corresponds to a preceding stage catalyst in the present invention. The small-sized oxidation catalyst 14 has a smaller volume and frontal projected area than those of the exhaust gas purification catalyst 13. The frontal projected area of the small-sized oxidation catalyst 14 is smaller than a cross-sectional area of the exhaust pipe 12 therearound, and therefore in the small-sized oxidation catalyst 14, a part of exhaust gas that passes through the exhaust pipe 12 circulates.

The exhaust gas purification catalyst 13 is configured to include, for example, an oxidation catalyst, three way catalyst, or NOx catalyst. The small-sized oxidation catalyst 14 is configured to include an oxidation catalyst, and as a catalytic substance, for example, Pt/CeO₂, Mn/CeO₂, Fe/CeO₂, Ni/CeO₂, Cu/CeO₂, or the like can be used. As base materials for the catalysts 13 and 14, cordierite or metal is used.

In the exhaust pipe 12 on an upstream side of the small-sized oxidation catalyst 14, a fuel feeding valve 15 for feeding the fuel to the small-sized oxidation catalyst 14 is arranged with an injection port thereof facing to the inside of the exhaust pipe 12. The fuel feeding valve 15 is fed with the fuel inside a fuel tank 44 through a fuel pump 43. In order to facilitate combustion, a pipeline, a control valve, and a compressor for feeding air for combustion into the exhaust pipe 12 may be provided.

In the exhaust pipe 12 on a downstream side of the fuel feeding valve 15, a glow plug 16 is provided. The glow plug 16 is arranged such that the fuel added from the fuel feeding valve 15 comes into contact with a fore end part thereof. The glow plug 16 is connected with a DC power supply and a step-up circuit (both are not illustrated) for feeding electricity thereto. As a measure for ignition, a ceramic heater may be used in place of the glow plug. In order to facilitate atomization of the fuel, a collision plate for making the fuel injected from the fuel feeding valve 15 collide may be arranged in the exhaust pipe 12. The small-sized oxidation catalyst 14, fuel feeding valve 15, and glow plug 16 constitute an exhaust gas temperature raising device 40, and the exhaust gas temperature raising device 40 is controlled by an ECU 50 that will be described later.

A bypass passage 31 is provided so as to making a connection between the upstream and downstream sides of the small-sized oxidation catalyst 14 in the exhaust gas passage. The bypass passage 31 makes a connection between a point on an upstream side of the turbine 7b in the exhaust gas passage and a point that is on the downstream side of the small-sized oxidation catalyst 14 and on the upstream side of the exhaust gas purification catalyst 13. Accordingly, when the engine main body 1 is running, the bypass passage 31 can directly introduce the exhaust gas of the engine main body 1 into the exhaust gas passage on the downstream side of the small-sized oxidation catalyst 14. An upstream side of the bypass passage 31 is preferably connected to the exhaust manifold 5, and particularly preferably connected to a gathering part of the exhaust manifold 5. The bypass passage 31 is provided with: a bypass valve 34 that opens/closes the bypass passage 31; and a step motor 35 that drives the bypass valve 34. The bypass valve 34 is a well-known butterfly valve; however, any other type of valve may be employed for it.

In the exhaust pipe 12 on the upstream side of the small-sized oxidation catalyst 14, a first pressure sensor 41 for detecting pressure in the exhaust gas passage is placed. In the exhaust pipe 12 that is on the downstream side of the small-sized oxidation catalyst 14 and on the upstream side of the exhaust gas purification catalyst 13, a second pressure sensor 42 for detecting pressure in the exhaust gas passage is placed.

Each of the fuel injection valves 3 is connected to a common rail 42 through a fuel feeding pipe 41, and the common rail 42 is connected to the fuel tank 44 through the fuel pump 43 that is electronically controlled and variable in ejection amount. The fuel stored in the fuel tank 44 is fed into the common rail 42 by the fuel pump 43, and the fuel fed into the common rail 42 is fed to the fuel injection valves 3 through the respective fuel feeding pipes 41.

The electronic control unit (ECU) 50 that is a controller includes a well-known digital computer, and is provided with an ROM (read only memory), RAM (random access memory), CPU (microprocessor), input port, and output port that are mutually connected through a bidirectional bus.

Output signals of the pressure sensors 41 and 42 are inputted to the input port of the ECU 50 through corresponding AD converters. An accelerator pedal 51 is connected with a load sensor 52 that generates output voltage proportional to an application amount of the accelerator pedal 51, and the output voltage of the load sensor 52 is inputted to the input port through a corresponding AD converter. Further, the input port is connected with a crank angle sensor 53 that generates an output pulse every time a crank shaft of the engine main body 1 rotates by, for example, 15 degrees. Still further, the input port is connected with an intake temperature sensor 54 that is placed near the throttle valve 10.

On the other hand, the output port of the ECU 50 is connected to the step motors for driving the throttle valve 10 and bypass valve 34. The output port is also connected to the fuel injection valves 3 and fuel pump 43 through respective corresponding drive circuits. Operation of such actuators is controlled by the ECU 50. In the ROM of the ECU 50, various types of programs, and reference and initial values are stored. Such reference and initial values include a reference temperature value C that is used for an after-mentioned process.

The ECU 50 calculates a fuel feeding instruction amount on the basis of a vehicle condition including detected values by the air flow meter 8, load sensor 52, crank angle sensor 53, and intake temperature sensor 54, in particular, parameters indicating an engine running condition, and outputs a control signal for opening the fuel injection valves 3 over a time period corresponding to the instruction amount. According to the control signal, the fuel having an amount corresponding to the fuel feeding instruction amount is fed from the fuel injection valves 3, and thereby the engine main body 1 is driven.

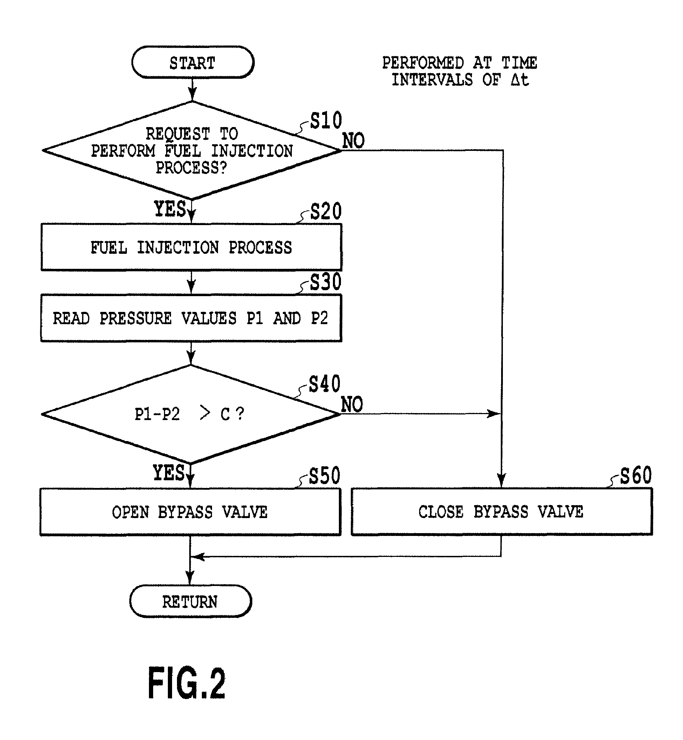

In parallel with the above-described driving control of the engine main body 1, the ECU 50 further controls the exhaust gas temperature raising device 40 and the bypass valve 34 to perform fuel feeding to the exhaust gas passage. A process routine in FIG. 2 is repeatedly performed at predetermined time intervals 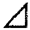 t throughout the running period of the engine main body 1.

In FIG. 2, the ECU 50 determines whether or not a request to perform fuel injection control by the fuel injection valve 15 is issued (S10). The request to perform the fuel injection control is, in the case where temperature of the exhaust gas purification catalyst 13 is raised at the time of low temperature such as cold start time, particulate matter (PM) deposited in the exhaust gas purification catalyst 13 is oxidized and combusted, or the exhaust gas purification catalyst 13 is an NOx occlusion reduction catalyst, for the purposes of NOx reduction and SOx poisoning recovery in the exhaust gas purification catalyst 13, issued by the ECU 50. A condition to issue the request to perform the fuel injection control is that, in the case of raising temperature at the time of low temperature, for example, detected temperature by the intake temperature sensor 54 is lower than a predetermined value, and in the case of the NOx reduction and SOx poisoning recovery in the exhaust gas purification catalyst 13, for example, an estimated value of a deposited amount or occluded amount of each substance exceeds a reference value, and an estimated value of temperature of the exhaust gas purification catalyst 13 exceeds a predetermined reference value. In the case of negation in Step S10, i.e., in the case where the performing request is not issued, the bypass valve is closed (S60).

In the case of affirmation in Step S10, i.e,, in the case where the request to perform the fuel injection control is issued, the ECU 50 controls the exhaust gas temperature raising device 40 to feed and ignite the fuel, and thereby raises temperature of the small-sized oxidation catalyst 14.

A part or all of the fuel is fed to the small-sized oxidation catalyst 14; and if the small-sized oxidation catalyst 14 is activated at this time, the fuel is oxidized in the small-sized oxidation catalyst; and oxidation reaction heat generated at this time raises the temperature of the small-sized oxidation catalyst 14. Also, as the temperature of the small-sized oxidation catalyst 14 is increased, hydrocarbons having higher carbon numbers are decomposed to generate highly reactive hydrocarbons having lower carbon numbers, and thereby the fuel is reformed into highly reactive fuel. In other words, on one hand, the small-sized oxidation catalyst 14 constitutes a rapid heater that rapidly generates heat, and on the other hand, constitutes a reformed fuel discharger that discharges the reformed fuel. Also, a part or all of the fuel fed from the fuel injection valve 15 is raised in temperature or ignited by the glow plug 16, and thereby a temperature rise of exhaust gas is facilitated.

Then, the ECU 50 reads a value of the upstream side pressure P1 detected by the first pressure sensor 41 and a value of the downstream side pressure P2 detected by the second pressure sensor 42 (S30). Subsequently, the ECU 50 determines whether or not a difference obtained by subtracting the read downstream side pressure P2 from the read upstream side pressure P1 is larger than the preliminarily set reference value C (S40). The reference value C can be experimentally set to a value that prevents the exhaust gas near the small-sized oxidation catalyst 14 from flowing back. The reference value C may be fixed, or dynamically obtained on the basis of physical quantities that indicates a system condition. The reference value C is preferably set within a predetermined range including 0, and also preferably set to a positive value to suppress hyper-reactive operation due to the influence of exhaust pulsation, or the like.

In the case of affirmation in Step S40, the ECU 50 outputs control to the actuator to open the bypass valve 34 (S50). Thus, the exhaust gas from the engine main body 1 is directly introduced through the bypass passage 31. In the case of negation in Step S40, the ECU 50 outputs control to the actuator to close the bypass valve 34 (S60). Thus, the exhaust gas through the bypass passage 31 is not introduced.

As a result of the above process, in the present embodiment, the bypass valve 34 is controlled such that the difference obtained by subtracting the downstream side pressure P2 from the upstream side pressure P1 constantly exceeds the reference value C.

As thus described, the present embodiment is provided with: the bypass passage 31 that directly introduces the exhaust gas of the engine main body 1 into the exhaust gas passage on the downstream side of the small-sized oxidation catalyst 14; and the bypass valve 34 that opens/closes the bypass passage 31. As a result, the exhaust gas having passed through the small-sized oxidation catalyst 14 and the exhaust gas not having passed through the small-sized oxidation catalyst 14 are stirred by the exhaust gas fed from the bypass passage 31, and thereby a temperature difference in exhaust gas that reaches the exhaust gas purification catalyst 13 on the downstream side of the small-sized oxidation catalyst 14 can be reduced. The reduction in temperature difference enables the exhaust gas purification catalyst 13 to be used more averagely throughout it, and therefore a size and/or a catalytic substance amount of the exhaust gas purification catalyst 13 can also be further reduced.

Also, pressure inside the exhaust manifold 5 is typically higher than that on a downstream side of the exhaust turbine 7b, and therefore in the present embodiment, even at the time of a low load, stirring can be preferably performed. Further, temperature inside the exhaust manifold 5 is typically higher than that on the downstream side of the exhaust turbine 7b, and therefore the high-temperature exhaust gas from the bypass passage can be preferably used.

Also, the system is provided with: the fuel injection valve 15 that is provided on the upstream side of the small-sized oxidation catalyst 14 and feeds the reducer to the exhaust gas flowing into the small-sized oxidation catalyst 14; and the glow plug 16 that heats the fed reducer, and therefore the exhaust gas can be preferably raised in temperature and reformed.

Further, the ECU 50 controls the bypass valve 34 such that the difference obtained by subtracting the pressure P2 on the downstream side of the small-sized oxidation catalyst 14 from the pressure P1 on the upstream side exceeds the predetermined value C, and therefore the exhaust gas near the small-sized oxidation catalyst 14 can be suppressed from flowing back.

Still further, in the present embodiment, the upstream side of the bypass passage 31 is connected to the exhaust gas passage on an upstream side of the exhaust turbine 7b of the turbocharger 7, and therefore the high-temperature and high-pressure exhaust gas on the upstream side of the exhaust turbine 7b can be preferably used. Also, the upstream side of the bypass passage 31 is connected to the exhaust manifold 5, and therefore the exhaust gas introduced from the bypass passage 31 can be particularly raised in temperature. Further, the upstream side of the bypass passage 31 is connected to the gathering part of the exhaust gas manifold 5, and therefore the influence of exhaust pulsation can be suppressed.

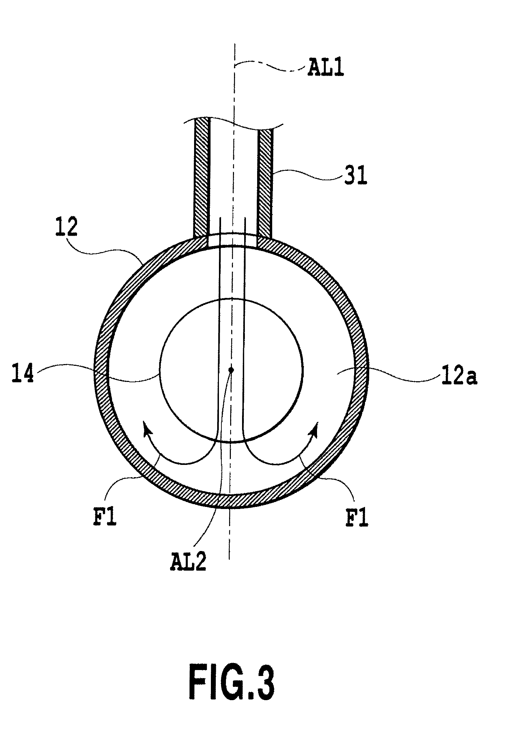

Next, various aspects of a location of the bypass passage 31 are described. FIGS. 3, 4, and 5 are respectively cross-sectional views of the exhaust pipe 12, which are viewed from the downstream side of the small-sized oxidation catalyst 14 toward the upstream side. The aspect (i) illustrated in FIG. 3 is one in which a downstream side end part of the bypass passage 31 is connected to the exhaust pipe 12 such that an axial line AL1 of the bypass passage 31 intersects with an axial line AL2 of the exhaust pipe 12 and small-sized oxidation catalyst 14. In this aspect, a flow F1 of the exhaust gas from the bypass passage 31 crosses a high-temperature region on the downstream side of the small-sized oxidation catalyst 14 and a bypass path 12a that is a region of the exhaust pipe 12 around the small-sized oxidation catalyst 14, and therefore the stirring of the exhaust gas can be facilitated.

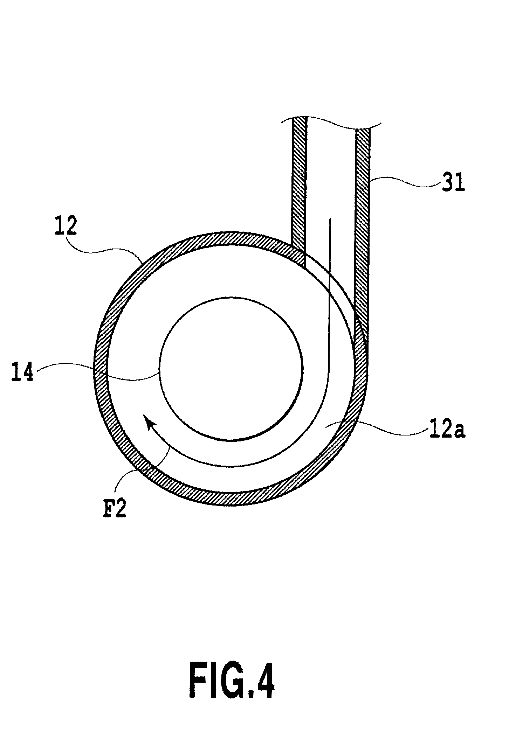

The aspect (ii) illustrated in FIG. 4 is the one in which the downstream side end part of the bypass passage 31 is connected onto a tangent of a pipe wall of the exhaust pipe 12. In this aspect, a flow F2 of the exhaust gas from the bypass passage 31 facilitates the generation of a vortex in the exhaust pipe 12, and therefore the stirring of the exhaust gas can be facilitated.

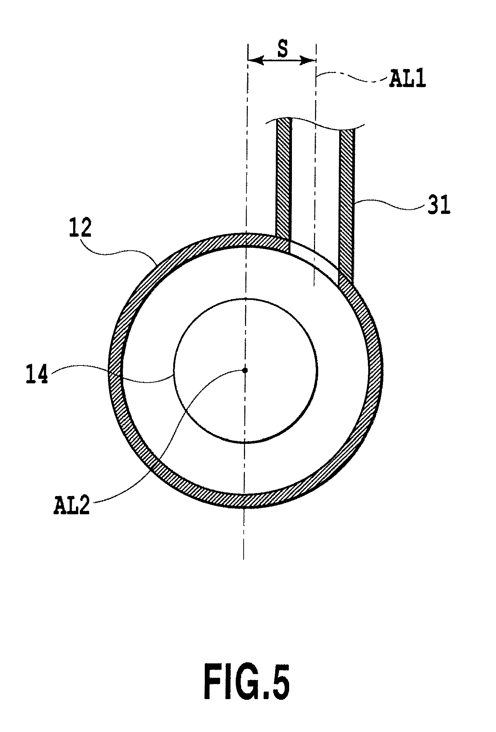

The aspect (iii) illustrated in FIG. 5 is the one in which the downstream side end part of the bypass passage 31 is connected to the exhaust pipe 12 such that the axial line AL1 of the bypass passage 31 has a shift S from the central axis AL2 of the exhaust pipe 12 and small-sized oxidation catalyst 14. In this aspect, turbulence inside the exhaust pipe 12 is facilitated due to the shift S, and therefore the stirring of the exhaust gas can be facilitated.

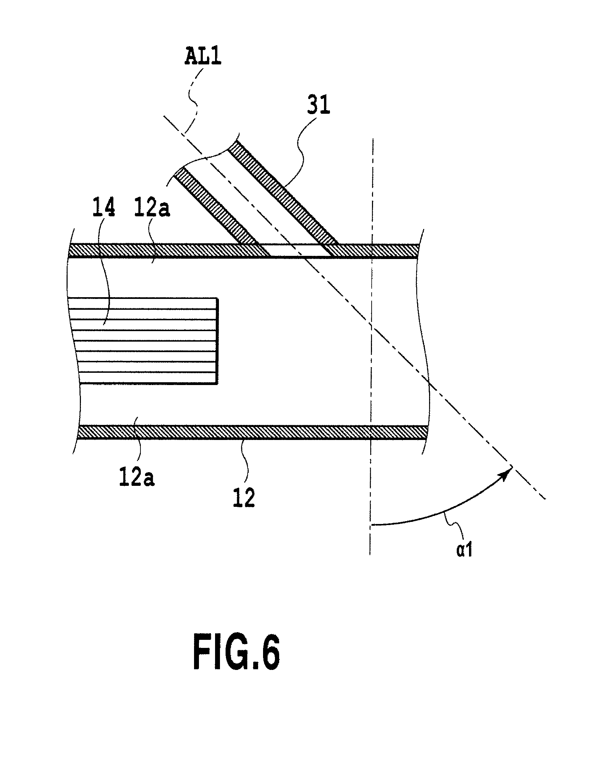

An aspect (iv) illustrated in FIG. 6 is the one in which the downstream side end part of the bypass passage 31 is connected to the exhaust pipe 12 such that the axial line AL1 of the bypass passage 31 has a deflection α 1 toward a downstream side of the exhaust pipe 12. In this aspect, the exhaust gas near the small-sized oxidation catalyst 14 can be suppressed from flowing back.

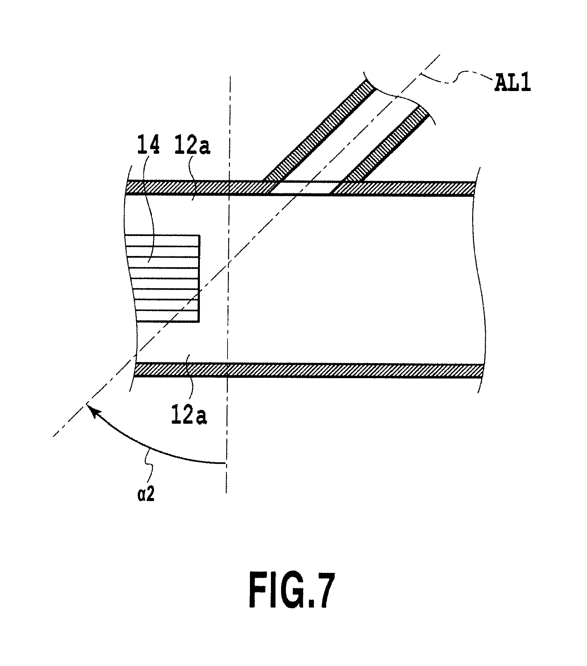

An aspect (v) illustrated in FIG. 7 is the one in which the downstream side end part of the bypass passage 31 is connected to the exhaust pipe 12 such that the axial line AL1 of the bypass passage 31 has a deflection α 2 toward an upstream side of the exhaust pipe 12. In this aspect, the stirring of the exhaust gas having passed through the small-sized oxidation catalyst 14 and the exhaust gas not having passed through the small-sized oxidation catalyst 14 can be facilitated.

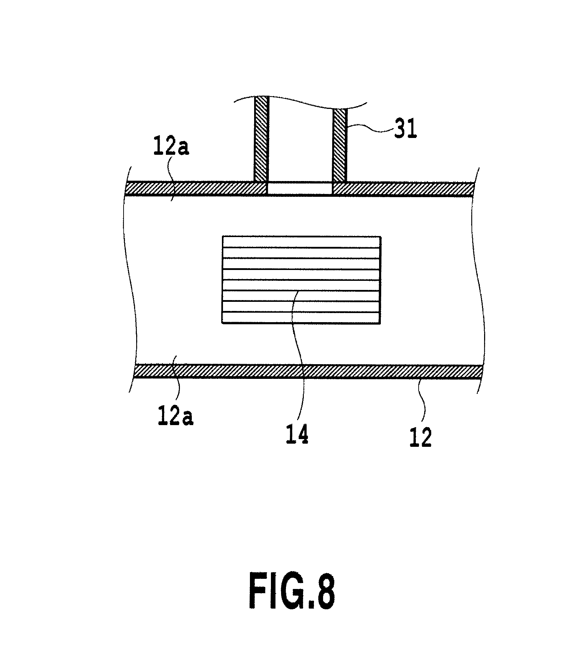

An aspect (vi) illustrated in FIG. 8 is the one in which the downstream side end part of the bypass passage 31 is connected to the exhaust pipe 12 with facing to an intermediate part of the small-sized oxidation catalyst 14 in a flow direction. In this aspect, the high-temperature exhaust gas introduced from the bypass passage 31 can facilitate the temperature rise of the small-sized oxidation catalyst 14.

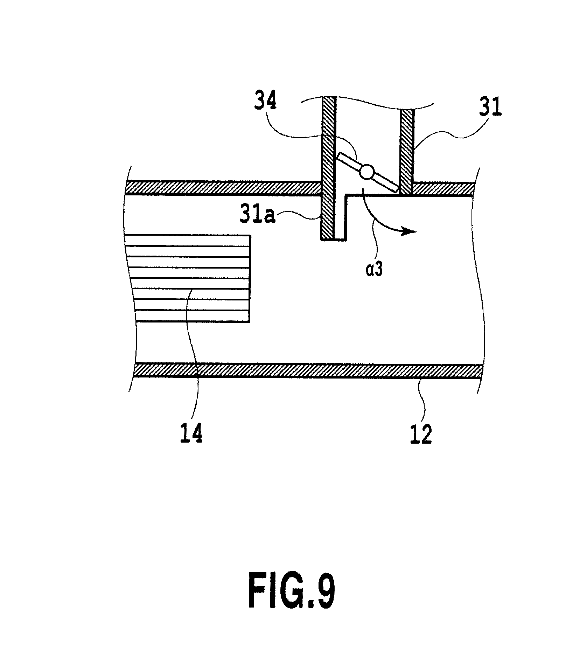

An aspect (vii) illustrated in FIG. 9 is the one in which on an upstream side of an opening edge at the downstream side end part of the bypass passage 31, an extension part 31a that is an extension of a pipe wall of the bypass passage 31 is arranged. In this aspect, the exhaust gas from the bypass passage 31 can be suppressed by the extension part 31a from flowing back near the small-sized oxidation catalyst 14.

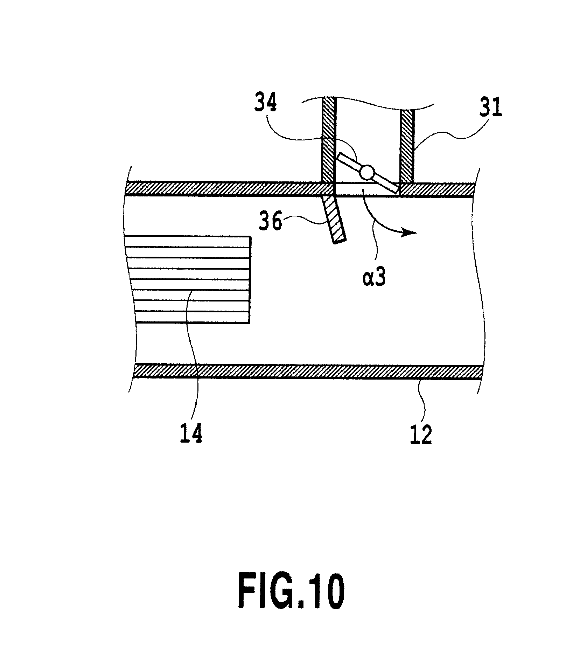

An aspect (viii) illustrated in FIG. 10 is the one in which on the upstream side of the opening edge at the downstream side end part of the bypass passage 31, a guide plate 36 is arranged. The guide plate 36 is sloped from a base end part to a fore end part thereof toward the downstream side, and thereby the exhaust gas from the bypass passage 31 is made to have a deflection α 3 toward the downstream side of the exhaust pipe 12. In this aspect, the exhaust gas from the bypass passage 31 can be suppressed from flowing back near the small-sized oxidation catalyst 14.

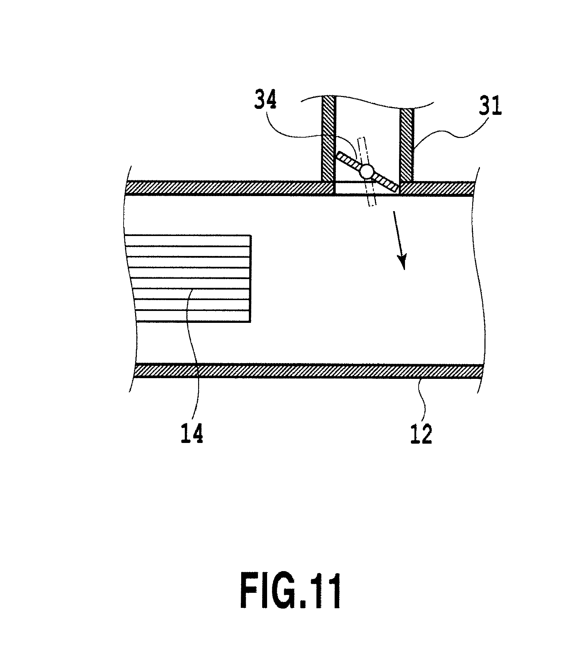

In an aspect (ix) illustrated in FIG. 11, the bypass valve 34 that is a butterfly valve is arranged near the downstream side end part of the bypass passage 31, and at the time of opening operation (indicated by a dashed-two dotted line), a downstream side part of a valve body of the bypass valve 34 protrudes into the exhaust gas passage. Accordingly, a flow of the exhaust gas from the bypass passage 31 can be deflected toward the downstream side by the valve body of the bypass valve 34, and therefore the exhaust gas can be suppressed from flowing back near the small-sized oxidation catalyst 14.

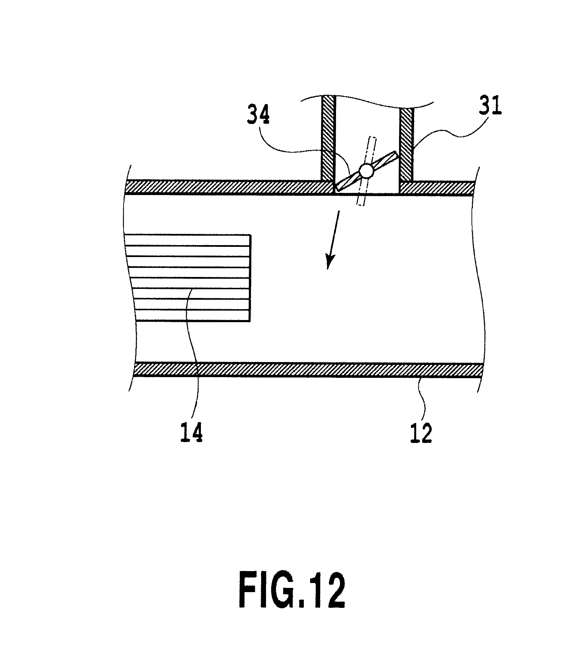

In an aspect (x) illustrated in FIG. 12, the bypass valve 34 that is a butterfly valve is arranged near the downstream side end part of the bypass passage 31, and at the time of the opening operation (indicated by a dashed-two dotted line), an upstream side part of the valve body of the bypass valve 34 protrudes into the exhaust gas passage. Accordingly, the flow of the exhaust gas from the bypass passage 31 can be deflected toward the upstream side by the valve body of the bypass valve 34, and therefore the stirring of the exhaust gas can be facilitated. Note that the same effect as those in the aspects (ix) and (x) can also be achieved by a flap valve having a valve body of which one end is provided with a rotary shaft.

The single exhaust pipe 12 may be connected with downstream side end parts of a plurality of bypass passages 31. Locations of the plurality of bypass passages 31 connected to the single exhaust pipe 12 may be, in a cross section of the exhaust pipe 12, symmetric or asymmetric, or alternatively rotationally symmetric.

The present invention has been described with showing a certain degree of concreteness; however, it should be appreciated that, without departing from the spirit and scope of the claimed invention, various modifications and alterations can be made. The various technical measures described in the above embodiment and respective variations can be mutually combined to the extent possible. In the above embodiment and respective variations, the bypass valve 34 is adapted to be in any of two states, i.e., open and close; however, an opening level may be changed in a multi stepwise or continuous manner between the two states.

In the above embodiment, the pressure values in the exhaust pipe 12 are directly detected by the pressure sensors 41 and 42; however, they may be estimated on the basis of parameters indicating conditions of the engine 1, such as a detected value by the air flow meter 8, an opening level of the throttle valve 10, and an fuel injection amount inside each of the combustion chambers. As the reducer, a substance other than the fuel may be used. Further, the present invention can also be applied to an engine not having a turbocharger.

### Reference Signs List

4: Intake manifold
5: Exhaust manifold
6: Intake pipe
7: Turbocharger
12: Exhaust pipe
13: Exhaust gas purification catalyst
14: Small-sized oxidation catalyst
31: Bypass passage
34: Bypass valve
50: ECU

## Claims

1. An exhaust gas purification system for an internal combustion engine, the system comprising:
an exhaust gas purification device that is provided in an exhaust gas passage of the internal combustion engine; a preceding stage catalyst that is provided in the exhaust gas passage at an upstream side of the exhaust gas purification device and passed through by a part of exhaust gas that flows through the exhaust gas passage;
a bypass passage that directly introduces exhaust gas of the internal combustion engine into the exhaust gas passage at a downstream side of the preceding stage catalyst and an upstream side of the exhaust gas purification device; and
a bypass valve that opens/closes the bypass passage.

2. The exhaust gas purification system for an internal combustion engine according to claim 1, further comprising a reducer feeding device that is provided on an upstream side of the preceding stage catalyst and feeds a reducer to exhaust gas that flows into the preceding stage catalyst.

3. The exhaust gas purification system for an internal combustion engine according to claim 2, further comprising a heating unit configured to heat the reducer fed from the reducer feeding device.

4. The exhaust gas purification system for an internal combustion engine according to claim 1, further comprising a controller that controls the bypass valve, wherein
the controller controls the bypass valve such that a difference obtained by subtracting pressure at a downstream side of the preceding stage catalyst from pressure at an upstream side of the preceding stage catalyst exceeds a predetermined value.

5. The exhaust gas purification system for an internal combustion engine according to claim 1, wherein
a downstream side end part of the bypass passage is connected to the exhaust gas passage with being deflected toward a downstream side of the exhaust gas passage.

6. The exhaust gas purification system for an internal combustion engine according to claim 1, wherein
a downstream side end part of the bypass passage is connected to the exhaust gas passage with being deflected toward an upstream side of the exhaust gas passage.

7. The exhaust gas purification system for an internal combustion engine according to claim 1, wherein
a downstream side end part of the bypass passage is connected to the exhaust gas passage with facing to an intermediate part of the preceding stage catalyst in a flow direction.

8. The exhaust gas purification system for an internal combustion engine according to claim 1, further comprising a turbocharger that has a turbine arranged in the exhaust gas passage, wherein
an upstream side of the bypass passage is connected to the exhaust gas passage at an upstream side of the turbine.

9. The exhaust gas purification system for an internal combustion engine according to claim 8, wherein
the upstream side of the bypass passage is connected to an exhaust manifold that is provided in the internal combustion engine.

10. The exhaust gas purification system for an internal combustion engine according to claim 1, wherein
the bypass valve is arranged near a downstream side end part of the bypass passage, and when operated to open, deflects a flow of exhaust gas from the bypass passage toward an upstream side of the exhaust gas passage.
